# EUROPEAN PATENT SPECIFICATION

(11) **EP 3 360 636 B1**
(45) Date of publication and mention of the grant of the patent: **12.06.2024**
(21) Application number: 17156078.2
(22) Date of filing: 14.02.2017
(51) Int. Cl.: B23H 11/00, B22F 3/105, B23D 57/00, B23H 7/02

(54) **WIRE CUTTING APPARATUS AND METHOD FOR SEPARATING PARTS FROM A BASE PLATE BY MEANS OF A WIRE CUTTING APPARATUS**
DRAHTSCHNEIDEVORRICHTUNG UND VERFAHREN ZUM TRENNEN VON TEILEN AUS EINER GRUNDPLATTE MIT EINER DRAHTSCHNEIDEVORRICHTUNG
APPAREIL DE DÉCOUPE DE FIL ET PROCÉDÉ POUR SÉPARER DES PARTIES D'UNE PLAQUE DE BASE AU MOYEN D'UN APPAREIL DE DÉCOUPE DE FIL

(43) Date of publication of application: 15.08.2018
(73) Proprietor: Agie Charmilles SA, 6616 Losone (CH)
(72) Inventor: Rota, Renato, 6616 Losone (CH)
(74) Representative: Li Schrag, Yue

(56) References cited:
- WO-A1-2013/093150
- CN-A- 101 428 364
- CN-A- 102 166 676
- CN-B- 103 506 721
- DE-A1- 3 723 250
- US-A1- 2013 112 366
- US-A1- 2013 180 866
- US-A1- 2014 191 455

## Description

The invention refers to a wire cutting apparatus and to a method for separating parts from a base plate by means of a wire cutting apparatus. Such an apparatus and such a method are known from WO 2013/093150 A1 disclosing the preambles of claims 1 and 6.

A wire cutting apparatus for separating parts from a base plate has a holding device which is configured to hold the base plate in at least a separation position relative to a separation device, wherein the separation device is configured to separate at least one part from the base plate from which the at least one part protrudes. Typically, the at least one part protrudes from the base plate in a direction facing vertically upwards. Parts being separated from the base plate are laboriously collected by hand piece by piece, which is cumbersome and costly. The layout of such a wire cutting apparatus is not conceived in view of automation and further processing of the separated parts.

Therefore, it is an object of the invention to provide a wire cutting apparatus and a method for separating parts from a base plate by means of a wire cutting apparatus which overcome the identified drawbacks.

The object of the invention is achieved by providing the subject-matter of the independent claims. Further advantageous embodiments are defined in the dependent claims.

In particular, a wire cutting apparatus for separating parts from a base plate is provided, wherein the holding device is configured to hold the base plate in the separation position in such a manner, that the at least one part protruding from the base plate points vertically downwards, i.e. along a gravitational vector. Thus, parts separated from the base plate will automatically fall in a well-defined direction, i.e. downwards, driven by gravity. It is then possible to easily collect them, which has not to be done manually, in particular due to the well-defined direction in which the separated parts travel. The base plate to which the parts are attached prior to separation is loaded in reverse direction into the wire cutting apparatus, and the parts separated from the base plate fall downward in an easy and natural way without the aid of dedicated and expensive systems. The reverse direction is relative to the mounting direction of the base plate in the generating process. For instance in a DMLS-process the base plate is mounted horizontally and moved vertically downwards during the generating process, and the additively manufactured parts protrude upwards from the base plate.

Thus, the wire cutting apparatus according to the invention permits for a simple and reliable full-automated system.

The holding device is configured to firmly hold the base plate, in particular in a well-defined position relative to the holding device. Further, the holding device is preferably adapted such that the base plate may be clamped to or otherwise fixed on the holding device. In particular, the holding device is configured to accurately hold the base plate in the well-defined position relative to the holding device.

The holding device is preferably configured and arranged to hold the base plate in the separation position such that the at least one part protrudes downward from the base plate.

A separation position is a position in which the base plate and the parts are arranged in such a manner that the parts can be separated from the base plate by the separation device. It is possible that there is more than one separation position, in particular when the holding device and the separation device or a separation element of the separation device are movable relative to each other.

In a preferred embodiment, the wire cutting apparatus is configured for separating parts resulting from an additive manufacturing process. In this case, the parts are preferably built in layers on a lowerable building platform. With the wire cutting apparatus according to the invention, the parts are separated from the building platform on which they are built and from which they therefore protrude. After having separated the parts from the platform, the platform is preferably grinded so that it can be used again with a next step of additive manufacturing.

Additive manufacturing (AM) processes are comparably expensive, but certain applications do already legitimate their use in a production environment in certain cases. This is because of their formidable flexibility, by which the form of the part is much better adapted to the required function than with traditional manufacturing methods. Another reason is that complex parts can be realized comparably quickly, which make AM-methods of particular interest for prototypes and for small batches. The need for highly function oriented parts is growing, such that additive methods will have a bright future.

Direct metal laser sintered (DMLS) parts are built layer wise on a lowerable building platform. A thin bed of metal powder is formed on said platform, melted by a laser beam which is oriented suitably in the X/Y plane by means of a galvanometer-scanner. Then the platform is lowered by a small amount, the bed of metal powder is rebuilt and the laser beam is activated and oriented again by means of mirrors. This procedure is repeated layer by layer, whereas the metal powder particles are welded together forming the entire part.

The DMLS-parts, or more generally AM-parts are removed from the building platform for further processing. This operation is made by a fast-wire machine. Here the building platform is mounted on the table of the fast-wire machine, with the DMLS-part or -parts protruding from the building platform. In the current art, the wire travels vertically across the working area, parallel with the platform. DMLS-parts are thus cut away from said platform and collected laboriously. The wire cutting apparatus and the method as suggested herein now allow for an easy and in particular automated collection of the separate parts, as set forth in the present specification.

The separation device of the wire cutting apparatus comprises a separation element, which is configured to separate at least one part from the base plate from which the part protrudes, wherein at least one of the holding device and the separation element is movable relative to the other one of the holding device and the separation element in at least one direction. By moving the holding device and the separation element relative to each other, a separation of the at least one part from the base plate can be easily carried out.

In a preferred embodiment of the wire cutting apparatus, the separation device comprises guiding elements, such as slider guides, guide rollers, or the like, to precisely guide the separation element with respect to the separation device.

Preferably, the at least one direction is orthogonal to the gravitational vector. This means in particular that the at least one direction lies in a plane parallel to the base plate. The at least one direction may be oriented along a y-axis of the wire cutting apparatus.

In a preferred embodiment, the holding device and the separation element are movable relative to each other along a first direction and along a second direction, wherein the first direction and the second direction are preferably oriented orthogonal to each other. Most preferably, the first direction is orthogonal to the gravitational vector, and in particular lies in a plane parallel to the base plate, wherein the second direction is parallel to the gravitational vector, and orthogonal to the base plate. In particular, the second direction is preferably oriented along a z-axis of the wire cutting apparatus. Thus it is possible to adjust the position of the separation element by moving the z-axis accordingly. Further, it is not only possible to separate the at least one part from the base plate, but also to cut a profile in a surface of the at least one part with the separation element in particular by superposing a relative movement between the holding device and the separation element in the first direction with a relative movement between these elements in the second direction.

It is possible that both the holding device and the separation element are movably arranged at the wire cutting apparatus. Preferably, they are guided by separate guides, and driven by separate actuators. In this case, the holding device on the one hand and the separation element on the other hand may move independently of each other.

It is also possible that the holding device is fixedly arranged at the wire cutting apparatus during separation process, and only the separation element is moved in the at least one direction during separation process. In this case, the holding device can be designed with a very high stability.

Most preferably, however, the separation element is fixedly arranged at the wire cutting apparatus with respect at least to the first direction and possibly to the second direction, and only the holding device is moved relative to the separation element along at least one of the first and second direction. This allows for a simple and reliable construction of the separation element, avoiding additional costly parts and complex means for holding the separation element tightened when moved. In particular, the wire cutting apparatus can be simplified because a length variation of the separation element occurring in operation is substantially lessened, and therefore a system to compensate a length variation of the separation element is simplified. It is to be noted that while the separation element is fixedly arranged at the wire cutting apparatus as described here above, the separation element may travel along its own axis in a region where actual cutting takes place along a wire travelling direction.

The separation element is submerged in a separation liquid. In this way, the separation process of the wire cutting apparatus is highly improved. The separation liquid is an emulsion. The emulsion, which is the separation liquid used in a fast-wire cutting process, is preferably filtered and pumped from a dielectric tank to a work tank, into which the parts protrude from the base plate in the separation position, and the filtered emulsion is in particular pumped to a level in the work tank that permits to completely submerge the parts and the separation element. However, at least one actuator and/or at least one guide for the separation element and/or the holding device is/are located above the level of the dielectric to the benefit of cost and reliability of the system.

According to the invention, the wire cutting apparatus comprises a collecting element which is arrangeable underneath the holding device and configured to receive the at least one part, when the part is separated from the base plate by the separation device. The collecting element thus allows to easily and automatically collect the parts separated from the base plate. In this respect, the collecting element preferably defines an inner volume, in which the parts can fall after having been separated from the base plate. The collecting element is preferably separable from the wire cutting apparatus such that it can be removed together with the parts collected in the collecting element, and in particular may be replaced by a new, empty collecting element. In this way, the separated parts may be most easily removed from the wire cutting apparatus, and a fresh collecting element can be provided in a speedy manner in order to collect further parts.

In a preferred embodiment, the collecting element is configured as a basket. Thus, the parts separated from the base plate can conveniently be collected in the inner volume defined by the basket. Preferably the collecting element is constructed so that the separation liquid can easily drain. The collecting element may comprise holes or apertures, a grid or mesh, or be configured as a gabion, for draining the separation liquid.

Preferably, the holding device is movable relative to the collecting element between a load position and an unload position. In the load position, the holding device is preferably arranged above the collecting element, such that a new base plate with at least one part protruding therefrom can be loaded to the holding device such that the at least one part protrudes at least partly into the collecting element. When the part is separated from the base plate, it naturally falls into the collecting element positioned underneath the holding device. In the unload position, the holding device can preferably be moved away from its position above the collecting element - in particular together with the base plate, or after the base plate has been removed from the holding device - such that the collecting element may easily be emptied or taken from the wire cutting apparatus together with the parts collected in the collecting element. Further, when the holding device is in its unload position, a fresh, empty collecting element may be positioned in the place of the removed collecting element.

Preferably, the holding device is slidable from the load position into the unload position - and vice versa - most preferably in a plane parallel to the base plate, most preferably along a y-axis the wire cutting apparatus.

According to a further aspect of the invention, the collecting element is preferably fixedly positioned relative to a stationary machine frame of the wire cutting apparatus. Such a configuration is most preferred when the holding device is not moved relative to the machine frame during separation process, but rather only the separation element is moved relative to the machine frame and to the holding device during separation process. However, in another manner, the collecting element may also be fixedly positioned relative to the stationary machine frame in an embodiment wherein the holding device is moved during separation process, if the parts separated from the base plate are small compared with the inner volume of the collecting element and allowed to overlap, fall onto each other and/or get in contact with each other when separated from the base plate and travelling into the collecting element.

In another preferred embodiment, the collecting element is movable along with the holding device relative to the stationary machine frame, in particular during the separation process. Here the collecting element is preferably moved parallel and synchronously with the holding device, so that there is no relative movement between holding device and collecting element. In this case, it is possible to move the holding device relative to the separation element during separation process, and still conveniently collect the parts in the collecting element while at the same time avoiding overlap between the different parts. In particular, the collecting element and the holding device may move synchronously with each other relative to the machine frame and to the separation element. Preferably the collecting element is mounted on separate guides, and the collecting element is either coupled to the holding device or moved by means of a separate actuator. After the separation process the collecting element is moved with respect to the holding device, in such a way that said collecting element becomes accessible, and that collecting element and/or separated parts are easily removable from the wire cutting apparatus.

According to the invention, the collecting element comprises at least one segregation element, which is arranged inside the collecting element and configured to segregate at least two distinct groups, e.g. lines and/or columns, of parts from each other. Additionally in the alternative, the segregation element is configured and arranged to segregate at least two distinct parts from each other. The segregation element allows for a well-defined segregation of parts separated from the base plate, such that the parts will not overlap and preferably not touch each other. In this way, also delicate and/or sensitive parts can be collected without a risk to damage the parts. The segregation element can also be used to provide well-defined positions for distinct parts within the collecting element, which may be useful for the automatic manipulation and subsequent operations on the parts.

The segregation element is configured as a wall or a plurality of walls, wherein it is possible that distinct walls of the segregation element are arranged perpendicular to each other, in particular in order to define different chambers for different groups of parts or even individual parts.

It is also possible that the segregation element defines at least one recess adapted to receive a part separated from the base plate, and preferably having a complementary shape to the outer shape of the part which is received in the recess. Of course, the segregation element can have a plurality of recesses configured to receive a plurality of respective parts separated from the base plate.

In a preferred embodiment of the invention, the holding device is configured as a closed frame having at least one support surface for supporting the base plate and at least one reference surface for defining a position of the base plate relative to the closed frame. A closed frame in particular is configured as a frame which is closed on four sides in a plane, in which the base plate is arranged in the separation position. The support surface in particular is a surface on which the base plate rests when it is held by the holding device. The at least one reference surface is a surface which contacts the base plate in the separation position such that the reference surface defines the position of the base plate in at least one direction. Most preferably, the closed frame has at least two reference surfaces, which define the position of the base plate in at least two directions, wherein further the support surface preferably defines the position of the base plate in a third direction.

If the holding device is configured as a closed frame, the base plate is preferably loaded on and attached to the holding device from above. A closed frame permits to support a high weight with low deformation.

Alternatively, the holding device is configured as an open frame, in particular a C-shaped frame, which has an open side for receiving the base plate from the open side. Preferably, the open frame embraces the base plate from three sides, wherein the fourth side of the open frame - as seen in a plane parallel to the base plate - is open or even missing, such that the base plate may be loaded on and attached to the open frame from this open fourth side. This in particular allows for loading the base plate from a front side of the wire cutting apparatus, which is very convenient, in particular if the base plate is manually loaded to the open frame.

Also the open frame preferably has at least one support surface for supporting the base plate and at least one reference surface for defining a position of the base plate relative to the open frame, as explained with reference to the closed frame.

Alternatively, the holding device is configured as a tiltable worktable, which is adapted to receive the base plate in a first angular position, the worktable further being configured to firmly hold the base plate, and to be tilted in a second angular position, in which the at least one part protrudes from the base plate downwards. The second angular position in particular is the separation position of the holding device. Most preferably, the worktable is tiltable about 180°. In the first angular position, it is preferably possible to load the base plate and fix the same to the worktable from above, such that the at least one part protrudes upwards from the base plate, when the base plate is attached to the worktable in its first angular position. The position of the worktable and the base plate is then reversed into the second angular position, such that the at least one part protrudes downwards.

Preferably, the worktable has a chuck for fixing or clamping the base plate to the worktable.

With a tiltable worktable, the handling of the base plate, in particular reversing the base plate, is done by the wire cutting apparatus instead of a loading or manipulating device, for example a robot.

In another embodiment of the invention the holding device has no special clamping means to hold the base plate. Here the base plate is simply mounted on the holding device, preferably abutting to the reference surfaces, and hold in place by its own weight, preferably resting on the support surface. This is possible in particular with separating processes having negligible process forces, such as wire electrical cutting processes.

In an embodiment of the invention, the wire cutting apparatus comprises a loading device which is configured to automatically arrange the base plate about the holding device and/or to automatically unload the at least one part, when the at least one part has been separated from the base plate. It is also possible that the wire cutting apparatus comprises a first loading device which is configured to automatically arrange the base plate about the holding device, and a second loading device, different from the first loading device, which is configured to automatically unload the at least one part when the at least one part has been separated from the base plate. The loading device allows for an automatic handling of the base plate and/or the parts for avoiding cumbersome and laborious manual work.

Preferably, the loading device is configured to automatically unload the at least one part from the collecting element, or, alternatively, to automatically unload the at least one part together with the collecting element from the machine frame, in particular to unload the collecting element having the at least one part received in the inner volume of the collecting element. The loading device or a further loading device may be configured to replace an unloaded or removed collecting element by a fresh, empty collecting element for collecting further parts separated from another base plate.

According to the invention, the wire cutting apparatus is configured as a fast-wire cutting machine.

The separation element is wire electrode.

The separation device has a wire travelling circuit allowing the separation element, which is configured as a wire, to travel along its own axis in a region where cutting takes place, in a wire travelling direction, which in the area of the separation process is essentially orthogonal to the separation direction. Moreover, the wire travelling circuit is constituted such that the wire travels back and forth at high speed along the wire travelling direction. Material is removed by a succession of electric discharges between the wire and the workpiece, i.e. the parts and the base plate. The wire most preferably is submerged in a separation liquid during the cutting operation.

According to another aspect of the invention, there is provided a method for separating parts from a base plate by means of a wire cutting apparatus, the method comprising holding a base plate with at least one part protruding from the base plate relative to a separation device of the wire cutting apparatus in a separation position such that the at least one part protrudes downwards from the base plate, i.e. along a gravitational vector, and further separating the at least one part from the base plate by means of the separation device. The method preferably is carried out by using a wire cutting apparatus according to at least one embodiment explained above. The method in particular allows for an easy, convenient and automatic collection of the parts separated from the base plate. In particular, in relation to the method, the advantages are realized which were explained in relation to the wire cutting apparatus.

According to an embodiment of the invention, the method further includes the step of collecting the at least one part separated from the base plate in a collecting element located underneath the base plate. Most preferably, the at least one part and/or the collecting element is automatically loaded and/or unloaded, in particular relative to the separation device, most preferably to or from a wire cutting apparatus comprising the separation device.

The invention is further explained with reference to the drawing, wherein:
- Figure 1: shows a first embodiment of a wire cutting apparatus for separating parts from a base plate;
- Figure 2: shows the first embodiment of the wire cutting apparatus according to Figure 1 together with a base plate and parts protruding from the base plate;
- Figure 3: shows a second embodiment of a wire cutting apparatus for separating parts from a base plate;
- Figure 4: shows a third embodiment of a wire cutting apparatus for separating parts from a base plate, and
- Figure 5: shows different embodiments of a collecting element for a wire cutting apparatus for separating parts from a base plate.

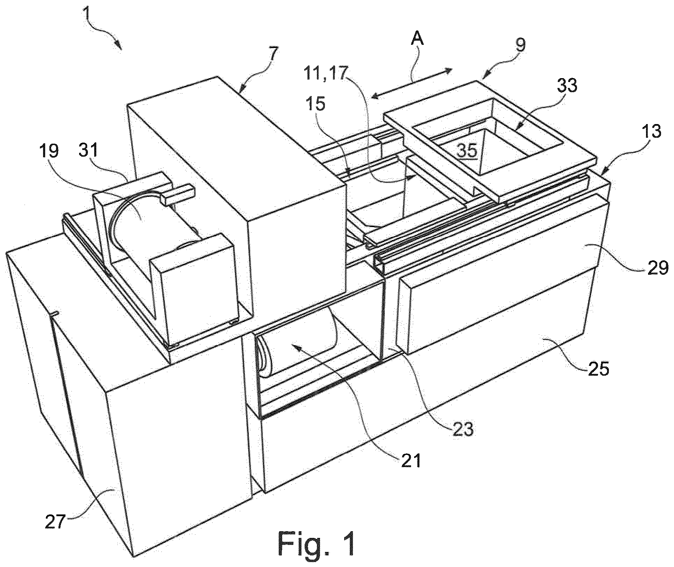

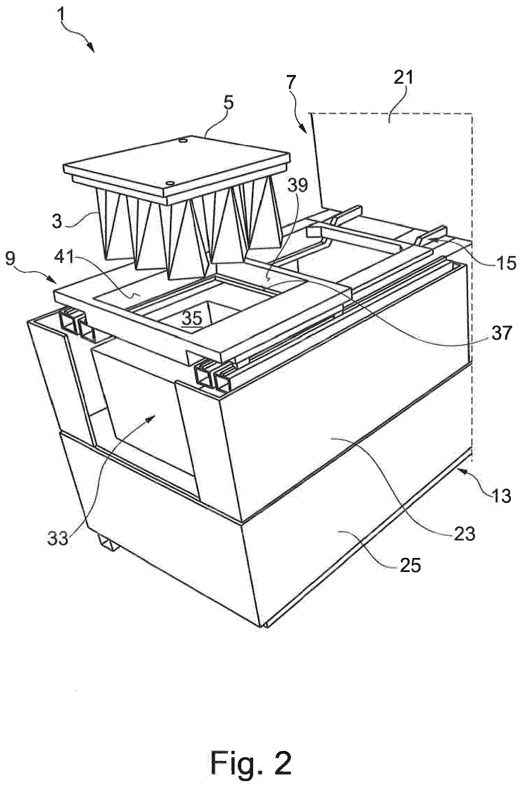

Figure 1 shows a first embodiment of a wire cutting apparatus 1, which is configured to separate parts 3 from a base plate 5 - the parts 3 and the base plate 5 being shown in Figure 2 -, wherein the wire cutting apparatus 1 comprises a separation device 7, configured to separate the parts 3 from the base plate 5, and further a holding device 9, configured to hold the base plate 5 in at least a separation position relative to the separation device 7. As may be acknowledged from Figure 2, the parts 3 protrude from the base plate 5, in particular in a direction oriented orthogonal to the base plate 5, and the holding device 9 is configured and arranged to hold the base plate 5 in the separation position in such a manner that the parts 3 protrude from the base plate in a downward direction, i.e. mainly along a gravitational vector. Thus, the parts 3 are allowed to fall downwards in an easy and convenient way when separated from the base plate 5, such that they can be collected and further processed without the need for cumbersome and laborious manual work.

The separation device 7 comprises a separation element 11, which is configured to separate the parts 3 from the base plate 5; and at least one of the holding device 9 and the separation element 11 is movable relative to the other one of the holding device 9 and the separation element 11 in at least one direction, preferably orthogonal to the gravitational vector, during separation process. In a preferred embodiment, the separation element 11 is fixedly held with respect to a separation direction depicted in Figure 1 by an arrow A relative to a stationary machine frame 13, and the holding device 9 is moved during separation process relative to the separation element 11 and to the machine frame 13 along the separation direction. The separation direction is a direction in which the separation of the parts 3 from the base plate 5 proceeds further during separation process.

In a different embodiment of the wire cutting apparatus 1, it is possible that the holding device 9 is fixedly held relative to the machine frame 13 at least with respect to the separation direction during separation process, and the separation element 11 is moved relative to the holding device 9 and to the machine frame 13 along the separation direction during separation process.

Further, in another embodiment it is possible that both the holding device 9 and the separation element 11 are moved relative to each other at least along the separation direction during separation process.

However, holding the separation element 11 fixed relative to the machine frame 13 with respect to the separation direction confers the advantage that no additional measures have to be taken to compensate for the length variation of the separation element 11 than the measures adopted in known fast travelling wire machines.

In another embodiment of the wire cutting apparatus 1, the holding device 9 and the separation element 11 are movable relative to each other in a first direction and in a second direction, wherein the first direction and the second direction are oriented orthogonal to each other. With reference to Figure 1, the first direction is preferably the separation direction depicted by the arrow A, and the second direction is preferably an out-of-plane direction oriented vertically relative to the machine frame 13, i.e. a z-axis of the wire cutting apparatus 1. In this case, it is possible to cut a profile into the parts 3 by moving the holding device 9 and the separation element 11 relative to each other in the first direction and - particularly at the same time - in the second direction. Most preferably, also in this case the separation element 11 is fixedly held with respect to the first and to the second direction relative to the machine frame 13, and the holding device 9 is moved as well in the first direction as in the second direction relative to the machine frame 13 and to the separation element 11. As mentioned it is herewith possible to cut a desired profile into the parts 3. This may be a profile which eases the grasping or clamping in the further manipulation and or processing of the parts. The profile may be a for instance a dovetail groove.

The separation element 11 is submerged in a separation fluid, which may be a cooling fluid, a dielectric, an emulsion, an electrolyte and/or a slurry.

In the embodiment depicted in Figure 1, the wire cutting apparatus 1 is a wire cutting machine, in particular a fast wire cutting machine, and the separation device 7 comprises a wire travelling circuit 15, along which the separation element 11, which is a wire 17, more specifically a wire electrode which is generally a molybdenum wire and which can travel back and forth in a wire travelling direction, the wire travelling direction being orthogonal to the separation direction and lying - along with the separation direction - in a plane parallel to the base plate 5. Generally the wire 17 preferably is a pure molybdenum wire having a diameter in the range of 0.1 to 0.2 mm. Several hundredth meters of wire 17 are stored on the wire drum 19, and travels back and forth at a speed of about 10 m/s and more. The wire 17 is permanently tensioned by means of a preloading system which may comprise an idler pulley with a tensioning weight. Cutting or separation in particular is achieved by applying discharge pulses between the base plate 5 bearing the parts 3 and the wire 17, by the back and forth movement of the wire 17 in the wire travelling direction and the feed motion of the parts 3 relative to the wire 17 along the separation direction.

The wire travelling circuit 15 further comprises a wire drum 19, from which the wire 17 is unwind and to which the wire is wind periodically, and a wire box unit 21 through which the wire is guided. Further, the wire cutting apparatus 1 comprises wire tensioning device by which the wire 17 is tensioned at a preset value, preferably by a preloading system installed in the wire box unit 21.

The wire cutting apparatus 1 further comprises a work tank 23 and a dielectric tank 25, wherein a dielectric as separation fluid is pumped continuously from the dielectric tank 25 to the work tank 23 at a level that permits that the parts 3 and the wire 17 are permanently submerged in the dielectric during cutting process. However, actuators and linear guides for the movement of the separation element 11 and/or the holding device 9 are preferably not submerged in the dielectric, but rather located above the level of the dielectric to the benefit of cost and reliability of the wire cutting apparatus 1.

The wire cutting apparatus 1 further comprises an electrical cabinet 27 and a generator box 29 housing an electric generator for providing an electrical discharge between the wire 17 and the parts 3 during cutting process. It goes without saying that in some embodiments some components of the wire cutting apparatus 1 such as the dielectric tank 25, the electrical cabinet 27, the generator box 29, etc. may be constituted as separate modules standing in proximity and connected to the main part of the wire cutting apparatus 1.

The wire drum 19 is arranged on a drum slide 31 for allowing a back and forth movement of the wire drum 19 in order to wind and unwind the wire 17 in an accurate and defined manner.

The wire cutting apparatus 1 further comprises a collecting element 33, which is arrangeable - and in Figure 1 arranged - underneath the holding device 9 and configured to receive the parts 3 once they are separated from the base plate 5 by the separation device 7. In particular, the collecting element 33 defines an inner volume 35 in which the parts 3 may be received and held. The collecting element 33 is preferably configured as a basket. In particular, the collecting element 33 is a basket.

When the holding device 9 is moveable relative to the machine frame 13 during cutting process, it is preferred that also the collecting element 33 is moveable along with the holding device 9 relative to the stationary machine frame 13. The movement of the holding device 9 and the collecting element 33 is most preferably synchronized such that there is no relative movement between the holding device 9 and the collecting element 33 during the movement of both these elements relative to the stationary machine frame 13. In this way, the parts 3 may be collected in a well-defined manner at defined positions in the collecting element 33 when separated from the base plate 5.

However, it is also possible that the collecting element 33 is fixedly positioned relative to the stationary machine frame 13. This may in particular be the case when also the holding device 9 is held fixed relative to the machine frame 13 during cutting process, or in a case where the parts 3 are small compared to the inner volume 35 of the collecting element 33 and are allowed to overlap with each other, such that it is not necessary to drop them in a well-defined position with respect to the collecting element 33.

The holding device 9 is preferably moveable between a load position and an unload position, wherein the load position allows for loading a base plate 5 with parts 3 protruding from the base plate 5 to the holding device 9, preferably in such a way that the parts 3 protrude from the base plate 5 into the inner volume 35 of the collecting element 33, and wherein the unload position allows for removal of the separated parts 3 from the collecting element 33, or, alternatively, for a removal of the collecting element 33 along with the parts 3 located in the inner volume 35 from the machine frame 13. The unload position of the holding device 9 further allows for the arrangement of a fresh, empty collecting element 33 at the position of the removed, filled collecting element 33 after removal of the same. Preferably after the removal of the separated parts 3, or, removal of the collecting element 33 and arrangement of an empty collecting element 33, the holding device 9 is moved back to a load position in which the processed base plate is unloaded and replaced by a new base plate 5 with parts 3.

All manipulations are preferably made by a manipulator, for instance a robot, which grasps the base plate 5 with the parts 3, the separated base plate 5, the separated parts 3, and/or the collecting element 33, by suitable gripping interfaces.

Figure 2 shows the first embodiment of the wire cutting apparatus 1 according to Figure 1 together with a base plate 5, from which parts 3 protrude in a downward direction. In all Figures 1 to 5 identical or functionally equivalent parts are referenced with the same reference numerals, such that for each figure reference is made to the respective antecedent description. The holding device 9 in this embodiment is configured as a closed frame, closed from four sides within a plane parallel to the base plate 5, when the base plate 5 is mounted to the holding device 9, and the base plate 5 together with the parts 3 can be loaded to the holding device 9 - as depicted in Figure 2 - from above. The closed frame has as support surface 37 for supporting the base plate 5, and at least one reference surface, here two reference surfaces, i.e. a first reference surface 39 and a second reference surface 41, for defining a position of the base plate 5 relative to the closed frame in x-direction and in y-direction of the machine frame 13. The support surface 37 also serves as a reference surface for the z-direction of the machine frame 13.

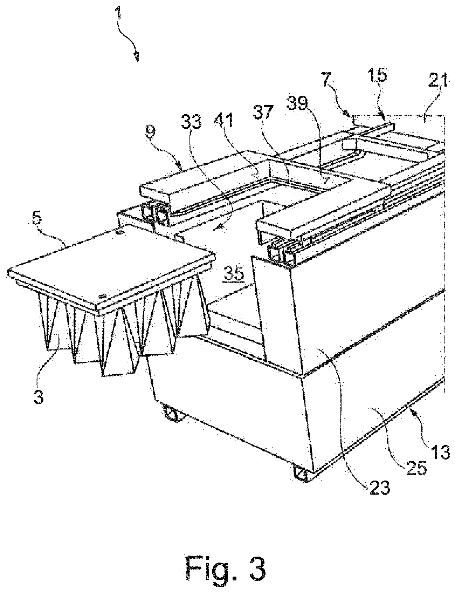

Figure 3 shows a second embodiment of the wire cutting apparatus 1. In this embodiment, the holding device 9 is an open frame, in particular a C-shaped frame, which is closed on three sides in a plane parallel to the base plate 5, when the base plate 5 is mounted on the holding device 9, and open on a fourth side. Thus, the open frame is configured to - in particular slidably - embrace the base plate 5 from three sides. The open side of the frame is configured to receive the base plate 5 from the open side, here from a front side of the machine frame 13, such that in the second embodiment the holding device 9 permits to load the base plate 5 from the front side of the wire cutting apparatus 1. While this allows for an easier loading - in particular for a manual loading by a worker -, the closed frame - as shown in Figure 2 - permits for supporting a higher weight with less deformation than an open construction as shown in Figure 3, under otherwise identical conditions, in particular identical dimensions of the frame.

Also the open frame of the holding device 9 as shown in Figure 3 has the support surface 37 and the first and second reference surfaces 39, 41.

Preferably, the collecting element 33 can be opened at a front side in order to allow the parts 3 and the base plate 5 to be loaded from the front side to the holding device 9 and into the inner volume 35 of the collecting element 33.

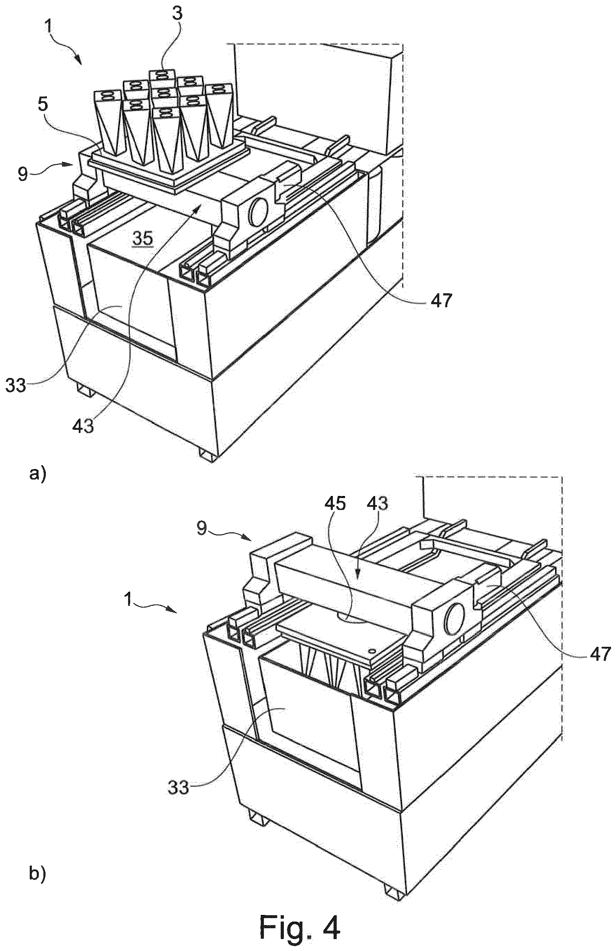

Figure 4 shows a third embodiment of the wire cutting apparatus 1. In this embodiment, the holding device 9 comprises a tiltable worktable 43 which is adapted to receive and firmly hold the base plate in a first angular position as shown in Figure 4a) and to be tilted about a tilting axis into a second angular position, which is the separation position, in which the parts 3 protrude downward from the base plate 5 into the inner volume 35 of the collecting element 33, as shown in Figure 4b). The tiltable worktable 43 preferably comprises a chuck 45 for firmly clamping the base plate 5 to the worktable 43. The base plate 5 preferably can be loaded on the worktable 43 from above. Thus, the parts 3 preferably protrude upwards from the base plate 5 in the first angular position of the worktable 43.

Preferably, the worktable 43 has its own actuator 47, in particular an electric motor, for actuating the tilting movement of the worktable 43.

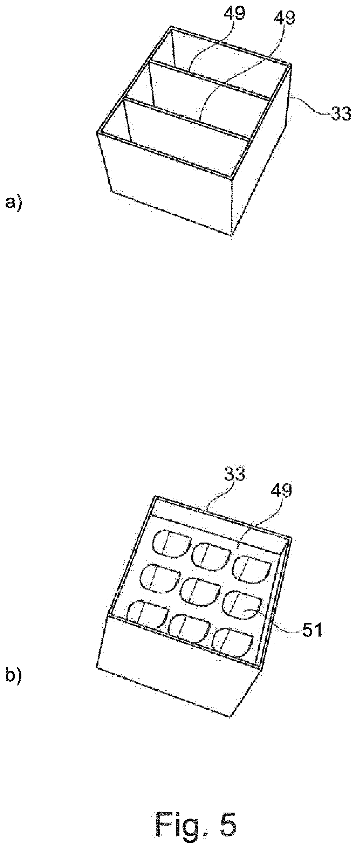

Figure 5 shows two different embodiments of the collecting element 33. The embodiment of the collecting element 33 as shown in Figure 5a) has at least one, here two segregation elements 49, which are arranged inside the collecting element 33 and configured to segregate at least two, here three distinct groups of parts 3, in particular rows or columns of parts 3, from each other. The segregation elements 49 allow for a more stable arrangement of the parts 3 inside the collecting element 33.

The segregation elements 49 are configured as walls in this embodiment. It is possible that the collecting element 33 comprises more than two segregation elements 49, and in particular more than two walls, for dividing the inner volume 35 in even more distinct sub-volumes. In particular, it is possible that several segregation elements 49, in particular different walls, are arranged orthogonal to each other in order to divide the inner volume 35 in several distinct chambers. Further, it is possible that each sub-volume of the inner volume 35 is configured to accommodate exactly one part 3, such that each part 3 is assigned to its own distinct sub-volume.

Insofar, the collecting element 33 can comprise at least one segregation element 49, which is arranged in the collecting element 33 and configured to segregate at least two distinct parts 3 from each other.

In the other embodiment of the collecting element 33 as shown in Figure 5b) the collecting element 33 comprises a segregation element 49, which comprises a plurality of recesses 51, of which only one is referenced with the respective reference numeral 51 for clarity's sake. The recesses 51 have a shape which is complementary to the shape of the parts 3, such that the parts 3 can be snugly fitted and securely accommodated separately in the recesses 51, each part 3 in a respective recess 51.

Preferably the parts 3 are additively manufactured parts, which most preferably are manufactured by direct metal laser sintering, and built layerwise on the base plate 5 which insofar acts as a building platform for the parts 3.

The parts 3 preferably are separated from the base plate 5 by holding the base plate 5 with the at least one part 3 protruding from the base plate 5 relative to the separation device 7 in a separation position such that the at least one part 3 protrudes downwards from the base plate 5, and by separating the at least one part 3 from the base plate 5 by means of the separation device 7.

Further, the parts 3 separated from the base plate 5 are collected in the collecting element 33, which is located underneath the base plate 5.

The wire cutting apparatus 1 preferably comprises a loading device, which is configured to automatically arrange the base plate 5 about the holding device 9, and/or to automatically unload the at least one part 3 - from the collecting element 33 or along with the collecting element 33 from the machine frame 13 - when the part 3 has been separated from the base plate 5, and/or to automatically unload the base plate 5 when the part 3 has been separated therefrom. The loading device is most preferably configured as a robot.

The parts 3 therefore are preferably automatically loaded to and/or unloaded from the wire cutting apparatus 1.

The wire cutting apparatus 1 is preferably integrated in a manufacturing cell including a manipulator or robot, one or more AM-machines, and/or other machines for further processing or finishing the separated parts.

### NUMERALS

- 1: wire cutting apparatus
- 3: part
- 5: base plate
- 7: separation device
- 9: holding device
- 11: separation element
- 13: machine frame
- 15: wire travelling circuit
- 17: wire
- 19: wire drum
- 21: wire box unit
- 23: work tank
- 25: dielectric tank
- 27: electrical cabinet
- 29: generator box
- 31: drum slide
- 33: collecting element
- 35: inner volume
- 37: support surface
- 39: first reference surface
- 41: second reference surface
- 43: tiltable worktable
- 45: chuck
- 47: actuator
- 49: segregation element
- 51: recess

- A: arrow

## Claims

1. Wire cutting apparatus (1) for separating parts (3) from a base plate (5), comprising:
- a wire electrode (7), configured to separate at least one part (3) from a base plate (5) from which the at least one part (3) protrudes;
- a holding device (9), configured to hold the base plate (5) in at least a separation position relative to the separation device (7), wherein
- the holding device (9) is configured to hold the base plate (5) in the separation position in such a manner, that the at least one part (3) protrudes downward from the base plate (5),
- a collecting element (33), which is arrangeable underneath the holding device and configured to receive the at least one part (3), when the at least one part is separated from the base plate by the separation device;
**characterized in that**
- the wire cutting apparatus is a fast-wire cutting machine including a wire travelling circuit, which is constituted such that the wire travels back and forth at high speed along the wire travelling direction;
- in that the wire electrode is submerged in a separation liquid and the material is removed by a succession of electrical discharge between the wire electrode and the workpiece; and **in that**
- the collecting element comprises at least one segregation element (49), arranged inside the collecting element and configured to segregate
a) at least two distinct groups of the at least one part, and/or
b) at least two distinct parts of the at least one part from each other
- wherein the segregation element is configured as a wall or a plurality of walls, defining at least one recess adapted to receive a part separated from the base plate.

2. Wire cutting apparatus (1) according to claim 1, wherein the wire electrode (11) is configured to separate the at least one part (3) from the base plate (5), wherein at least one of the holding device (9) and the wire electrode (11) is moveable relative to the other one of the holding device (9) and the wire electrode (11) in at least one direction, preferably orthogonal to the direction in which the at least one part (3) protrudes from the base plate (5) in the separation position.

3. Wire cutting apparatus (1) according to anyone of the preceding claims, wherein the collecting element (33) is fixedly positioned relative to a stationary machine frame (13) of the apparatus (1) or movable along with the holding device (9) relative to the stationary machine frame (13).

4. Wire cutting apparatus (1) according to anyone of the preceding claims, wherein the holding device (9) is configured as
a) a closed frame having at least one support surface (37) for supporting the base plate (5), and at least one reference surface (39,41) for defining a position of the base plate (5) relative to the closed frame, or
b) an open frame having an open side for receiving the base plate (5) from the open side, or
c) a tiltable worktable (43) adapted to receive the base plate (5) in a first angular position, further adapted to firmly hold the base plate (5), and further adapted to be tilted in a second angular position, in which the at least one part (3) protrudes downwards from the base plate (5).

5. Wire cutting apparatus (1) according to anyone of the preceding claims, wherein the wire cutting apparatus (1) comprises a loading device, configured to automatically load and/or unload the base plate (5) about/from the holding device (9) and/or to automatically unload the at least one part (3), when the part (3) has been separated from the base plate (5).

6. Method for separating parts (3) from a base plate (5) by means of a wire cutting apparatus (1), comprising:
- holding by a holding device a base plate (5) with at least one part (3) protruding from the base plate (5) relative to a wire electrode (7) of a wire cutting apparatus (1) in a separation position such that the at least one part (3) protrudes downwards from the base plate (5),
- separating the at least one part (3) from the base plate (5) by means of the wire electrode (7), **characterized in that**
- the wire cutting apparatus is a fast-wire cutting machine including a wire travelling circuit, which is constituted such that the wire travels back and forth at high speed along the wire travelling direction, the wire electrode is submerged in a separation liquid and the material is removed by a succession of electrical discharge between the wire electrode and the workpiece
- wherein the wire cutting apparatus comprises a collecting element (33), which is arrangeable underneath the holding device and configured to receive the at least one part (3), when the at least one part is separated from the base plate by the separation device;
- wherein the collecting element comprises at least one segregation element (49), arranged inside the collecting element and configured to segregate
a) at least two distinct groups of the at least one part, and/or
b) at least two distinct parts of the at least one part from each other
- wherein the segregation element is configured as a wall or a plurality of walls, defining at least one recess adapted to receive a part separated from the base plate.

7. Method according to claim 6, wherein the method further includes collecting the at least one part (3) separated from the base plate (5) in the collecting element (33) located underneath the base plate (5).

## Patentansprüche

1. Drahtschneidevorrichtung (1) zum Trennen von Teilen (3) von einer Basisplatte (5), umfassend:
- eine Drahtelektrode (7), ausgelegt zum Trennen mindestens eines Teils (3) von der Basisplatte (5), von der der mindestens eine Teil (3) vorsteht;
- eine Halteeinrichtung (9), ausgelegt zum Halten der Basisplatte (5) in mindestens einer Trennposition relativ zu der Trenneinrichtung (7),
wobei
die Halteeinrichtung (9) dazu ausgelegt ist, die Basisplatte (5) derart in der Trennposition zu halten, dass der mindestens eine Teil (3) von der Basisplatte (5) nach unten vorsteht,
- ein Auffangelement (33), das unter der Halteeinrichtung angeordnet werden kann und dazu ausgelegt ist, den mindestens einen Teil (3) aufzunehmen, wenn der mindestens eine Teil durch die Trenneinrichtung von der Basisplatte getrennt wird;
**dadurch gekennzeichnet, dass**
- es sich bei der Drahtschneidevorrichtung um eine Schnelldrahtschneidemaschine handelt, die einen Drahtfortbewegungskreis enthält, der derart ausgestaltet ist, dass sich der Draht mit hoher Geschwindigkeit entlang der Drahtfortbewegungsrichtung hin- und herbewegt;
- dass die Drahtelektrode in einer Trennflüssigkeit eingetaucht ist und das Material durch eine Folge elektrischer Entladungen zwischen der Drahtelektrode und dem Werkstück entfernt wird; und dadurch, dass
- das Auffangelement mindestens ein Abgrenzelement (49) umfasst, das in dem Auffangelement angeordnet und dazu ausgelegt ist,
a) mindestens zwei verschiedene Gruppen des mindestens einen Teils und/oder
b) mindestens zwei verschiedene Teile des mindestens einen Teils voneinander abzugrenzen,
- wobei das Abgrenzelement als eine Wand oder mehrere Wände konfiguriert ist, die mindestens eine zum Empfangen eines von der Basisplatte getrennten Teils eingerichtete Vertiefung definieren.

2. Drahtschneidevorrichtung (1) nach Anspruch 1, wobei die Drahtelektrode (11) dazu ausgelegt ist, den mindestens einen Teil (3) von der Basisplatte (5) zu trennen, wobei eine der Halteeinrichtung (9) und der Drahtelektrode (11) relativ zu der anderen der Halteeinrichtung (9) und der Drahtelektrode (11) in mindestens einer Richtung, vorzugsweise orthogonal zu der Richtung, in der der mindestens eine Teil (3) von der Basisplatte (5) in der Trennposition vorsteht, beweglich ist.

3. Drahtschneidevorrichtung (1) nach einem der vorhergehenden Ansprüche, wobei das Auffangelement (33) relativ zu einem stationären Maschinenrahmen (13) der Vorrichtung (1) fest positioniert ist oder zusammen mit der Halteeinrichtung (9) relativ zu dem stationären Maschinenrahmen (13) beweglich ist.

4. Drahtschneidevorrichtung (1) nach einem der vorhergehenden Ansprüche, wobei die Halteeinrichtung (9) als Folgendes ausgelegt ist:
a) ein geschlossener Rahmen mit mindestens einer Stützoberfläche (37) zum Stützen der Basisplatte (5) und mindestens einer Referenzoberfläche (39, 41) zum Definieren einer Position der Basisplatte (5) relativ zu dem geschlossenen Rahmen, oder
b) ein offener Rahmen mit einer offenen Seite zum Aufnehmen der Basisplatte (5) von der offenen Seite, oder
c) ein neigbarer Arbeitstisch (43), der dazu eingerichtet ist die Basisplatte (5) in einer ersten Winkelposition aufzunehmen, ferner dazu eingerichtet ist, die Basisplatte (5) fest zu halten, und ferner dazu eingerichtet ist, in einer zweiten Winkelposition geneigt zu werden, in der der mindestens eine Teil (3) von der Basisplatte (5) nach unten vorsteht.

5. Drahtschneidevorrichtung (1) nach einem der vorhergehenden Ansprüche, wobei die Drahtschneidevorrichtung (1) eine Ladeeinrichtung umfasst, ausgelegt zum automatischen Laden und/oder Entladen der Basisplatte (5) um die/aus der Halteeinrichtung (9) und/oder zum automatischen Entladen des mindestens einen Teils (3), wenn der Teil (3) von der Basisplatte (5) getrennt wurde.

6. Verfahren zum Trennen von Teilen (3) aus einer Basisplatte (5) mittels einer Drahtschneidevorrichtung (1), umfassend:
- Halten, durch eine Halteeinrichtung, einer Basisplatte (5) mit mindestens einem von der Basisplatte (5) vorstehenden Teil (3) relativ zu einer Drahtelektrode (7) einer Drahtschneidevorrichtung (1) in einer Trennposition, sodass der mindestens eine Teil (3) von der Basisplatte (5) nach unten vorsteht,
- Trennen des mindestens einen Teils (3) von der Basisplatte (5) mittels der Drahtelektrode (7), **dadurch gekennzeichnet, dass**
- es sich bei der Drahtschneidevorrichtung um eine Schnelldrahtschneidemaschine handelt, die einen Drahtfortbewegungskreis enthält, der derart ausgestaltet ist, dass sich der Draht mit hoher Geschwindigkeit entlang der Drahtfortbewegungsrichtung hin- und herbewegt, die Drahtelektrode in einer Trennflüssigkeit eingetaucht ist und das Material durch eine Folge elektrischer Entladungen zwischen der Drahtelektrode und dem Werkstück entfernt wird,
- wobei die Drahtschneidevorrichtung ein Auffangelement (33) umfasst, das unter der Halteeinrichtung angeordnet werden kann und dazu ausgelegt ist, den mindestens einen Teil (3) aufzunehmen, wenn der mindestens eine Teil durch die Trenneinrichtung von der Basisplatte getrennt wird;
- wobei das Auffangelement mindestens ein Abgrenzelement (49) umfasst, das in dem Auffangelement angeordnet und dazu ausgelegt ist,
a) mindestens zwei verschiedene Gruppen des mindestens einen Teils und/oder
b) mindestens zwei verschiedene Teile des mindestens einen Teils voneinander abzugrenzen,
- wobei das Abgrenzelement als eine Wand oder mehrere Wände konfiguriert ist, die mindestens eine zum Empfangen eines von der Basisplatte getrennten Teils eingerichtete Vertiefung definieren.

7. Verfahren nach Anspruch 6, wobei das Verfahren ferner Auffangen des mindestens einen von der Basisplatte (5) getrennten Teils (3) in dem sich unter der Basisplatte (5) befindenden Auffangelement (33) beinhaltet.

## Revendications

1. Appareil de coupe de fil (1) pour séparer des parties (3) d'une plaque base (5), comprenant :
- une électrode fil (7), configurée pour séparer au moins une partie (3) d'une plaque base (5) depuis laquelle l'au moins une partie (3) est en saillie ;
- un dispositif de maintien (9), configuré pour maintenir la plaque base (5) dans au moins une position de séparation par rapport au dispositif de séparation (7), le dispositif de maintien (9) étant configuré pour maintenir la plaque base (5) dans la position de séparation de telle manière que l'au moins une partie (3) est en saillie vers le bas depuis la plaque base (5),
- un élément de collecte (33), qui peut être agencé en dessous du dispositif de maintien et configuré pour recevoir l'au moins une partie (3), lorsque l'au moins une partie est séparée de la plaque base par le dispositif de séparation ;
**caractérisé en ce que**
- l'appareil de coupe de fil est une machine de coupe de fil rapide comportant un circuit de déplacement de fil, qui est constitué de telle sorte que le fil se déplace d'avant en arrière à haute vitesse le long de la direction de déplacement de fil ;
- **en ce que** l'électrode fil est immergée dans un liquide de séparation et le matériau est retiré par une succession de décharges électriques entre l'électrode fil et la pièce à usiner ; et **en ce que**
- l'élément de collecte comprend au moins un élément de ségrégation (49), agencé à l'intérieur de l'élément de collecte et configuré pour ségréguer
a) au moins deux groupes distincts de l'au moins une partie, et/ou
b) au moins deux parties distinctes de l'au moins une partie l'une de l'autre
- l'élément de ségrégation étant configuré en tant que paroi ou pluralité de parois, définissant au moins un évidement conçu pour recevoir une partie séparée de la plaque base.

2. Appareil de coupe de fil (1) selon la revendication 1, l'électrode fil (11) étant configurée pour séparer l'au moins une partie (3) de la plaque base (5), au moins un du dispositif de maintien (9) et de l'électrode fil (11) étant mobile par rapport à l'autre du dispositif de maintien (9) et de l'électrode fil (11) dans au moins une direction, de préférence orthogonale à la direction dans laquelle l'au moins une partie (3) est en saillie de la plaque base (5) dans la position de séparation.

3. Appareil de coupe de fil (1) selon l'une quelconque des revendications précédentes, l'élément de collecte (33) étant positionné de manière fixe par rapport à un cadre de machine fixe (13) de l'appareil (1) ou mobile avec le dispositif de maintien (9) par rapport au cadre de machine fixe (13).

4. Appareil de coupe de fil (1) selon l'une quelconque des revendications précédentes, le dispositif de maintien (9) étant configuré en tant que
a) cadre fermé ayant au moins une surface support (37) pour soutenir la plaque base (5), et au moins une surface de référence (39, 41) pour définir une position de la plaque base (5) par rapport au cadre fermé, ou
b) cadre ouvert ayant un côté ouvert pour recevoir la plaque base (5) depuis le côté couvert, ou
c) table de travail inclinable (43) conçue pour recevoir la plaque base (5) dans une première position angulaire, conçue en outre pour maintenir fermement la plaque base (5), et conçue en outre pour être inclinée dans une deuxième position angulaire, dans laquelle l'au moins une partie (3) est en saillie vers le bas depuis la plaque base (5).

5. Appareil de coupe de fil (1) selon l'une quelconque des revendications précédentes, l'appareil de coupe de fil (1) comprenant un dispositif de chargement, configuré pour charger et/ou décharger automatiquement la plaque base (5) sur le/du dispositif de maintien (9) et/ou pour décharger automatiquement l'au moins une partie (3), lorsque la partie (3) a été séparée de la plaque base (5) .

6. Procédé de séparation de parties (3) d'une plaque base (5) au moyen d'un appareil de coupe de fil (1), comprenant :
- le maintien par un dispositif de maintien d'une plaque base (5) avec au moins une partie (3) en saillie depuis la plaque base (5) par rapport à une électrode fil (7) d'un appareil de coupe de fil (1) dans une position de séparation de telle manière que l'au moins une partie (3) est en saillie vers le bas depuis la plaque base (5),
- la séparation de l'au moins une partie (3) de la plaque base (5) au moyen de l'électrode fil (7), **caractérisé en ce que**
- l'appareil de coupe de fil est une machine de coupe de fil rapide comportant un circuit de déplacement de fil, qui est constitué de telle sorte que le fil se déplace d'avant en arrière à haute vitesse le long de la direction de déplacement de fil, l'électrode fil est immergée dans un liquide de séparation et le matériau est retiré par une succession de décharges électriques entre l'électrode fil et la pièce à usiner
- l'appareil de coupe de fil comprenant un élément de collecte (33), qui peut être agencé en dessous du dispositif de maintien et configuré pour recevoir l'au moins une partie (3), lorsque l'au moins une partie est séparée de la plaque base par le dispositif de séparation ;
- l'élément de collecte comprenant au moins un élément de ségrégation (49), agencé à l'intérieur de l'élément de collecte et configuré pour ségréguer
a) au moins deux groupes distincts de l'au moins une partie, et/ou
b) au moins deux parties distinctes de l'au moins une partie l'une de l'autre
- l'élément de ségrégation étant configuré en tant que paroi ou pluralité de parois, définissant au moins un évidement conçu pour recevoir une partie séparée de la plaque base.

7. Procédé selon la revendication 6, le procédé comportant en outre la collecte de l'au moins une partie (3) séparée de la plaque base (5) dans l'élément de collecte (33) situé en dessous de la plaque base (5).
